# EUROPEAN PATENT APPLICATION

(11) **EP 3 459 696 A1**
(43) Date of publication of application: **27.03.2019**
(21) Application number: 18184214.7
(22) Date of filing: 18.07.2018
(51) Int. Cl.: B25J 18/06, B25J 9/10, B25J 19/00

(54) **HYPER-REDUNDANT MANIPULATORS**

(30) Priority: 18.08.2017 GB 201713277
(71) Applicant: Rolls-Royce plc, London SW1E 6AT (GB)
(72) Inventor: Norton, Andrew, Derby, Derbyshire DE24 8BJ (GB); Axinte, Dragos, Derby, Derbyshire DE24 8BJ (GB); Dong, Xin, Derby, Derbyshire DE24 8BJ (GB); Alatorre Troncoso, David, Derby, Derbyshire DE24 8BJ (GB)
(74) Representative: Rolls-Royce plc

(57) **Abstract**

A hyper-redundant manipulator for insertion into an area of interest through an aperture is shown. The hyper-redundant manipulator comprises a plurality of individually-lockable sections, each of which comprise a plurality of segments having positions that are adjustable relative to each other so as to adopt a pose. A respective locking mechanism is located in each section and is configured to switch between a locked condition in which the pose of the segments in the respective section is locked, and an unlocked condition in which the pose of the segments in the respective section is not locked. A plurality of actuators common to all of the sections are provided to adjust the pose of the segments in sections with a locking mechanism in an unlocked condition.

## Description

### TECHNICAL FIELD

This disclosure concerns to hyper-redundant manipulators, such as snake-arm or continuum robots.

### BACKGROUND

Hyper-redundant manipulators are robots that have a large number of actuated degrees of freedom. For example, a robot that is required to position and orient an object in space needs six actuated degrees of freedom, so a robot with seven or more degrees of freedom is redundant with respect to this task.

Hyper-redundant manipulators may be used to perform in-situ inspection and/or repair activities in difficult-to-access or hazardous areas. For example, hyper-redundant manipulators may be utilised for inspection or repair of components inside a gas turbine engine. In such an application, access to the interior of the engine is typically gained through a borescope port or through the fan. The size of the manipulator is therefore limited, and thus a need exists for manipulator architectures which combine long reach with sufficiently small cross-section to fit through such features.

### SUMMARY

The present invention is directed towards a hyper-redundant manipulator for insertion into an area of interest through an aperture, and a method of controlling a hyper-redundant manipulator for insertion into an area of interest through an aperture.

The hyper-redundant manipulator comprises a plurality of individually-lockable sections, each of which comprise a plurality of segments having positions that are adjustable relative to each other so as to adopt a pose. Each section includes a respective locking mechanism configured to switch between a locked condition in which the pose of the segments in the respective section is locked, and an unlocked condition in which the pose of the segments in the respective section is not locked. A plurality of actuators is provided, each of which are configured to adjust the pose of the segments in sections with a locking mechanism in an unlocked condition.

The hyper-redundant manipulator may be controlled by locking the pose of one or more sections with a respective locking mechanism in each section, adjusting the pose of the remaining sections with one or more actuators.

### BRIEF DESCRIPTION OF THE DRAWINGS

The invention will now be described by way of example only with reference to the accompanying drawings, which are purely schematic and not to scale, and in which:
Figure 1 shows a gas turbine engine, featuring an area of interest;
Figure 2 shows an exemplary hyper-redundant manipulator in the form of a robot;
Figure 3 shows the robot of Figure 2 in greater detail;
Figures 4A and 4B show the configuration of the sections in the arm of the robot;
Figures 5A and 5B show a locking mechanism;
Figure 6A and 6B show a gripping mechanism;
Figures 7A to 7D show an exemplary movement of the arm;
Figure 8 shows the configuration of the controller shown in Figure 2;
Figure 9 shows steps carried out by the microcontroller;
Figure 10 shows steps carried out by the microcontroller;
Figure 11 shows steps carried out by the microcontroller;
Figures 12A and 12B shows an alternative configuration of the sections in the arm of the robot; and
Figures 13A and 13B show cross sections along C-C of Figure 12B.

### DETAILED DESCRIPTION

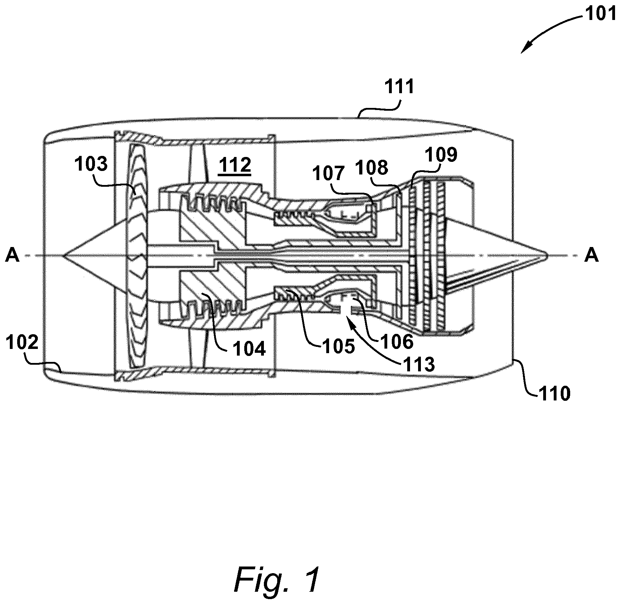

A gas turbine engine of the turbofan type is shown in Figure 1.

The engine 101 has a principal and rotational axis A-A and comprises, in axial flow series, an air intake 102, a propulsive fan 103, an intermediate pressure compressor 104, a high-pressure compressor 105, combustion equipment 106, a high-pressure turbine 107, an intermediate pressure turbine 108, a low-pressure turbine 109, and an exhaust nozzle 110. A nacelle 111 generally surrounds the engine 101 and defines both the intake 102 and the exhaust nozzle 110.

The engine 101 works in the conventional manner so that air entering the intake 102 is accelerated by the fan 103 to produce two air flows: a first air flow into the intermediate pressure compressor 104 and a second air flow which passes through a bypass duct 112 to provide propulsive thrust. The intermediate pressure compressor 104 compresses the air flow directed into it before delivering that air to the high pressure compressor 105 where further compression takes place.

The compressed air exhausted from the high-pressure compressor 105 is directed into the combustion system 106 where it is mixed with fuel and the mixture combusted. The resultant hot combustion products then expand through, and thereby drive the high pressure turbine 107, intermediate pressure turbine 108, and low pressure turbine 109 before being exhausted through the nozzle 110 to provide additional propulsive thrust. The high pressure turbine 107, intermediate pressure turbine 108, and low pressure turbine 109 drive respectively the high pressure compressor 105, intermediate pressure compressor 104, and fan 103, each by a suitable interconnecting shaft.

The engine 101 includes an aperture to facilitate inspection of areas of interest therein. In this example, the aperture is a borescope port 113. In this example the area of interest is the combustion system 106. Further borescope ports may be provided in practice to facilitate access to other areas of interest, such as the compressor and turbine stages.

Apertures such as the borescope port 113 allow routine inspections and/or repair of the engine 101 to be performed without resorting to removal from its installation location on an aircraft. However, both the number and size of borescope ports is limited, the latter to typically around 10 millimetres. Thus it is possible that in order to inspect/repair other areas of interest within the engine 101, it is necessary to gain access via other apertures, such as the intake 102, and to guide inspection/repair equipment through the compressor stages. In both access cases, the inspection/repair equipment must therefore be capable of navigating a narrow, long, and tortuous path to the area of interest.

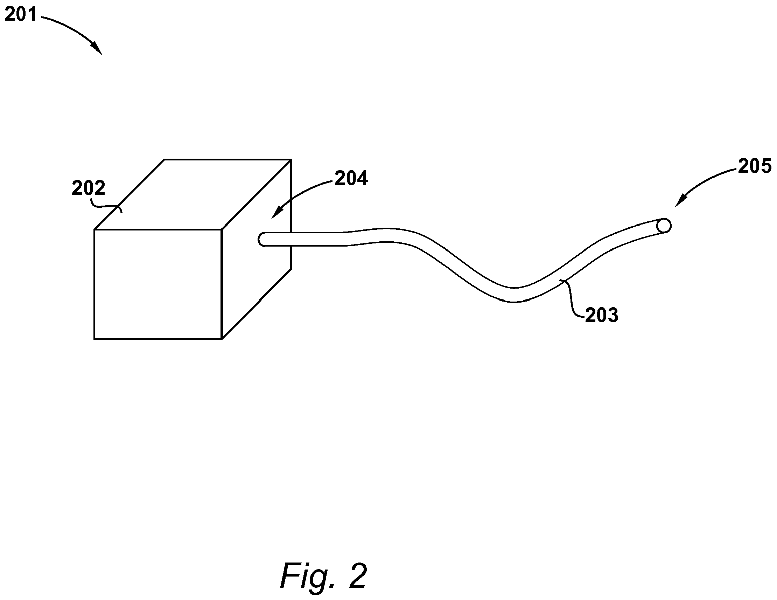

An exemplary hyper-redundant manipulator in accordance with an aspect of the invention is illustrated in Figure 2, in the form of robot 201. In this embodiment, the robot 201 is suitably sized for insertion into gas turbine engine 101 via the borescope port 113. It will be appreciated however that the principles embodied by the robot 201 may be applied in other situations where inspection of an area of interest through an aperture must be performed, such as inspection of pipework in industrial plants, search and rescue, etc. The robot 201 comprises an actuation pack 202, extending from which is an arm 203. The arm 203 has a proximal end 204 adjacent the actuation pack 202, and a distal end 205 to which an inspection device or repair equipment (not shown) may be attached. For example, a camera may be attached for imaging components within a gas turbine engine, or alternatively a clamp may be attached for, say, removing debris within a gas turbine engine.

The arm 203 is mobilised by the actuation pack 202 to adopt a desired pose. As shown in the Figure, the pose may be curved. The pose may alternatively be straight, or include corners, or any combination thereof. It will be appreciated that the pose may be altered to allow the arm 203 to pass around objects, such as components within a gas turbine engine. In an embodiment, the robot 201 may be configured such that the arm 203 is a tip-following arm.

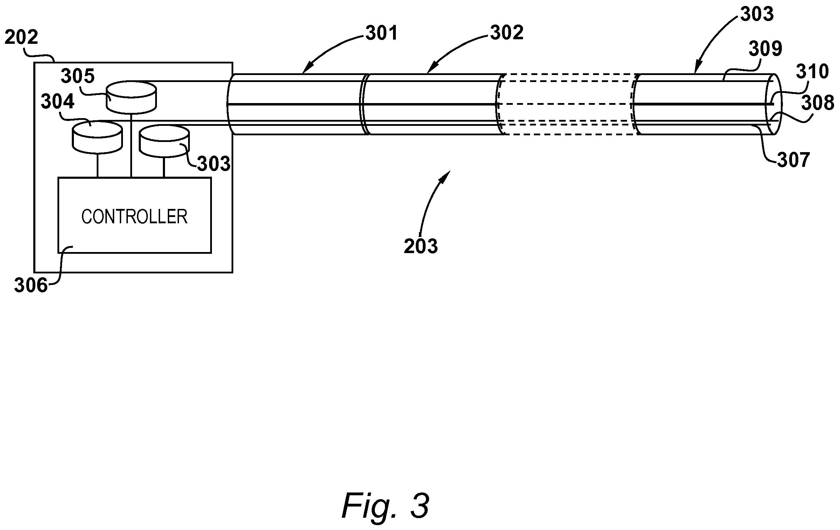

The robot 201 is shown in greater detail in Figure 3. In the present embodiment, the arm 203 comprises a plurality of individually-lockable sections, identified in Figure 3 as, from proximal end 204 to distal end 205, a section 301, a section 302, and a section 303. It will be appreciated that the precise number of sections in the arm 203 depends upon both the desired length of the arm and the redundancy required. Thus a greater number of sections may be included (indicated by the dashed section between section 302 and section 303). Alternatively, fewer sections may be provided.

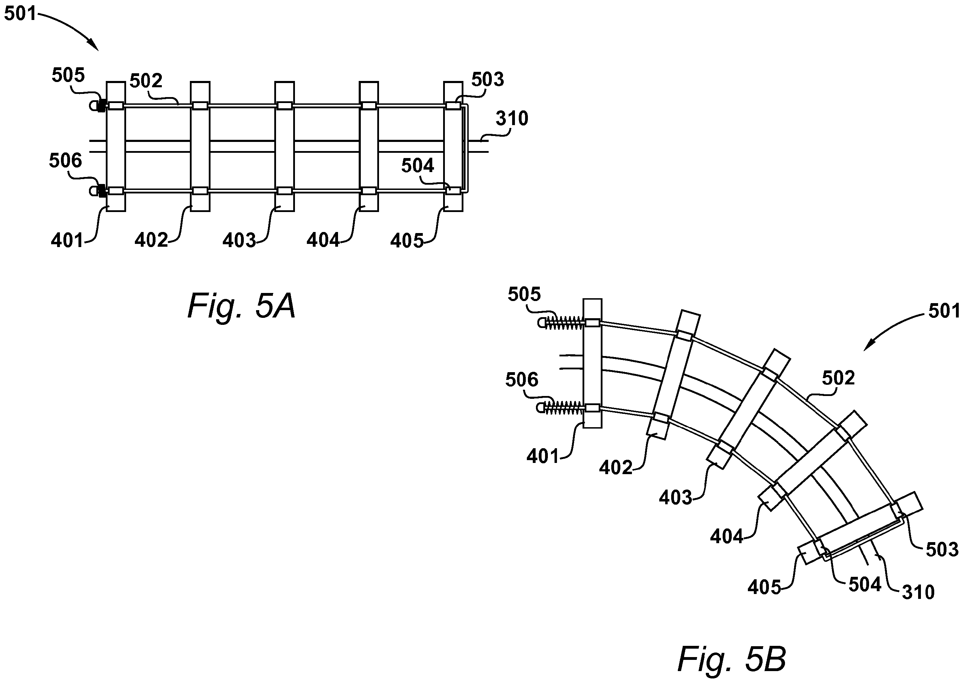

Each section is individually lockable in terms of its pose to achieve hyper redundancy. To facilitate this, each section in the present embodiment includes a respective locking mechanism switchable between a locked condition, in which the pose of the particular section is locked, and an unlocked condition, in which the pose of the particular section may be changed. The locking mechanism in each section will be described with reference to Figures 5A and 5B.

The overall arrangement of the actuation pack 202 and the sections 301, 302, and 303 is shown in Figure 3, albeit with the locking mechanisms omitted for clarity.

Adjustment of the pose of the arm 203 is facilitated by the provision in this embodiment of plurality of actuators in the actuation pack 202. In the present embodiment, three actuators 304, 305 and 306 are provided to facilitate adjustment of the pose in two dimensions. It is envisaged however that two actuators may be provided should only adjustment of the arm's pose in only one dimension be required.

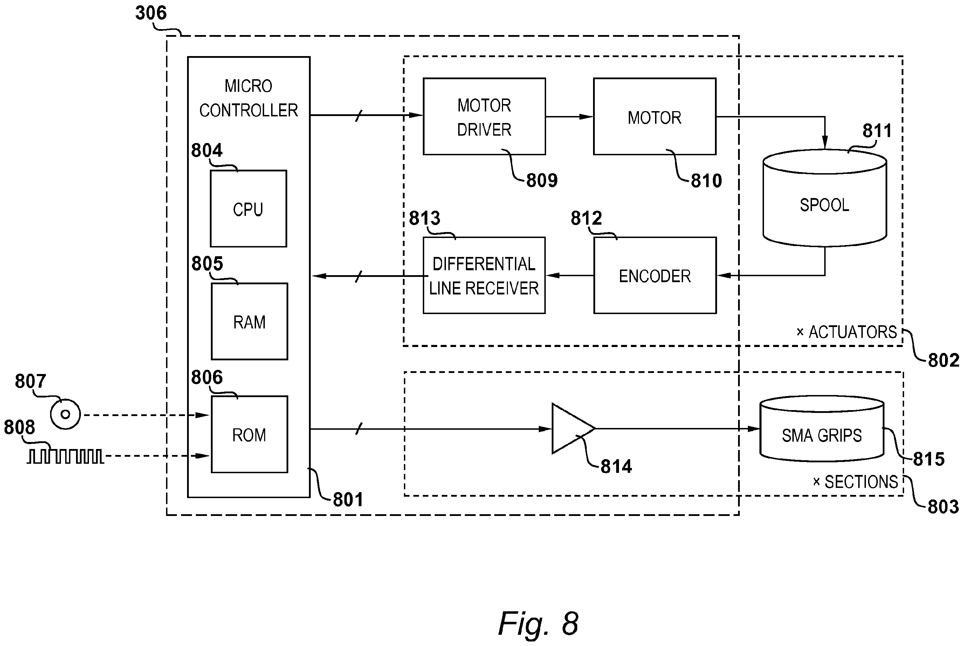

In the present example, the actuators 303, 304, and 305 are controlled by a controller 306. Controller 306 will be described in further detail with reference to Figure 8.

In the present example, the actuators 303, 304, and 305 are motor-driven cable spools having respective actuation cables 307, 308, and 309 extending therefrom. Other actuator arrangements, such as two actuators each having two actuation cables extending therefrom in a push/pull configuration may be used.

The actuation cables terminate at the distal end 205 of the final section 303 of the arm 203. In addition to the actuation cables, a central backbone 310 is provided in the centre of the sections 301, 302, and 303 to which they are attached. The backbone in the present example is flexible to allow the arm 203 to adopt any required pose. Further, the backbone is in a specific embodiment hollow to allow services to pass therethrough to the distal end 205 for the inspection device or repair equipment attached to the arm 203. Such services may be electrical data cables, optical fibres, gas or liquid conduits depending upon the task being undertaken.

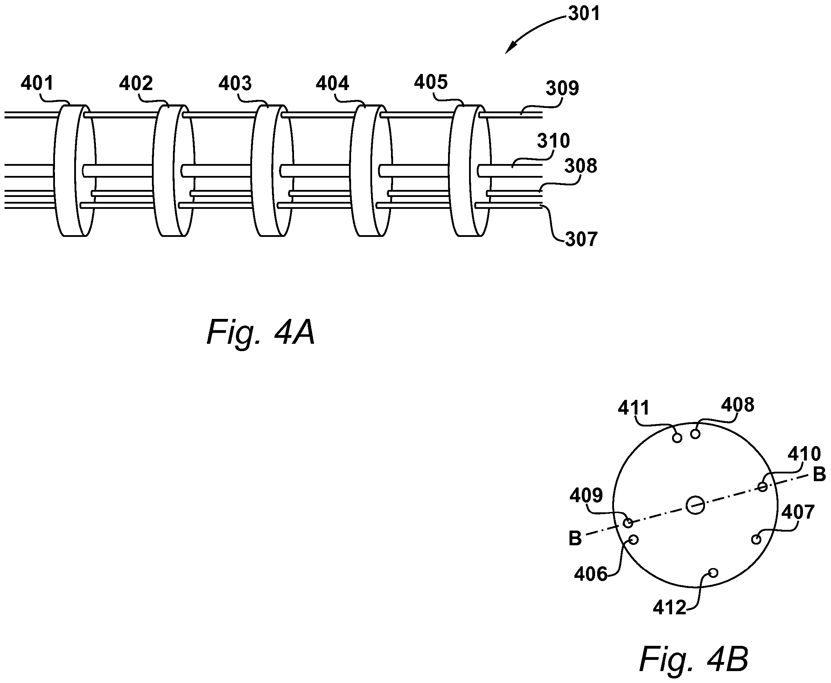

By winding one, some or all actuation cable in or out of their spools, the pose of the arm 203 may be adjusted. The configuration of the sections 301, 302, and 303 in the present embodiment to achieve this is shown in Figure 4A. Again, the locking mechanism for the section is omitted for clarity as it will be described with reference to Figures 5A and 5B.

Referring to Figure 4A, each section, in this example section 301, includes a plurality (five in this example) of segments 401, 402, 403, 404 and 405. It will be appreciated that more or fewer segments could be provided depending upon the implementation. The segments 401 to 405 are in the present embodiment disc-shaped. Polygonal shapes could be used in the alternative.

In this specific embodiment, the segments 401 to 405 are attached to the backbone 310 in spaced relation to one another. In this embodiment, the backbone 310 is a flexible tube. In a specific embodiment, the backbone is a nitinol tube. It may instead be a rubber tube, or any other flexible material. Alternatively, the backbone may be a rod, again possibly nitinol or rubber, if it does not need to carry services. In another embodiment, the backbone may be made up of a number of rigid sections to which each segment is attached respectively, with universal joints or similar connecting the sections. In other alternative embodiments, different backbone architectures may be used, such as those including two or more backbones, which may assist in reduction of twist.

Referring to Figure 4B, the actuation cables 307, 308, and 309 pass through respective apertures 406, 407, and 408 in each segment. Further, whilst not shown in the Figures, in the present embodiment, the actuation cables 307, 308, and 309 terminate in the segment at the distal end 305 of the arm 203. In this way, as the length of each actuation cable is adjusted by winding in or out from its respective spool, the pose of the arm 203 may be changed.

As identified in the specific embodiment of Figure 4B, apertures 409, 410, 411, and 412 are also provided in the segments. This is for the locking mechanism.

A locking mechanism 501 according to an embodiment of the invention is shown in Figures 5A and 5B, which is a view along B-B of Figure 4B. The locking mechanism 501 is operative to lock the pose of the section in which it is located in one dimension. Thus, in the present embodiment, two locking mechanisms 501 are located in each section, each one configured to lock the pose in a respective one of two orthogonal dimensions. Further, in the present example, the same locking mechanism is used in each of the sections making up the arm 203.

The locking mechanism 501 includes a cable 502 which originates in the first segment 401 of the section 301. The cable passes through each aperture 409 in each segment 401 to 405 on one side of the backbone 310. In this embodiment, the cable loops around the second end segment 405 and returns through each aperture 410 on the other side of the backbone 310. As shown in Figure 4A, the apertures 409 and 405 are directly opposite one another.

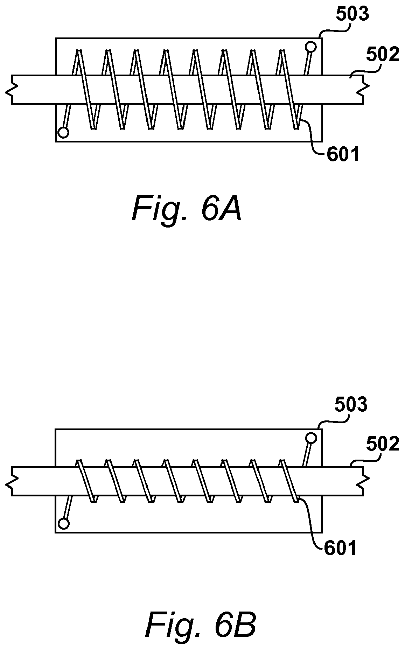

Referring again to Figure 5A, the segment 405 includes in this example a first gripping mechanism 503 in its aperture 409 and a second gripping mechanism 504 in its aperture 410. The configuration of the gripping mechanisms will be described further with reference to Figures 6A and 6B.

Referring again to Figure 5A, the gripping mechanisms 503 and 504 operate to grip the cable 502 under control of the controller 306. Electronic or mechanical control is possible via cables (not shown) routed through the backbone 310. Alternatively, such cables may be routed through any other possible route within the robot 201 should, for example, the backbone 310 be a rod, or it be reserved for deployment of other services for example.

In order to facilitate the locking in position of the section, the cable 502 is held under tension. In the present example, the tension is provided by a respective spring 505 and 506 located at each end of the cable 502 arranged to take up slack in the cable. In the specific example illustrated in Figures 5A and 5B, each end of the cable 502 comprises an end cap against which the respective spring acts to provide the requisite tension.

Thus, as illustrated in Figure 5B, when the section is curved, the required length of cable 502 is shorter than in the substantially straight pose of Figure 5A. By holding the cable under tension, in this example the springs 505 and 506 allow the cable 502 to remain taught and, on activation of the gripping mechanisms 503 and 504, lock the pose of the section in the plane of the locking mechanism 501. In an alternative embodiment to that illustrated, further tensioning devices such as springs may be provided at other positions along the extend of cable 502, such as where it loops around segment 405.

In the specific embodiment illustrated in Figures 5A and 5B, segments 401 to 404 include respective gripping mechanisms 503 and 504 in their apertures 409 and 410, as well as segment 405. This assists further with locking the pose of the section, particularly should a high load be placed on the arm 203.

Instead of a single cable 502, in an alternative embodiment two cables may be provided which each terminate at the second end segment 405. With gripping mechanisms provided in each aperture 409 and 410, this will facilitate locking in a similar manner to the single cable 502.

It is envisaged that in an alternative embodiment, the locking mechanism may comprise a clutch arrangement operable upon the cable 502, either electrically or mechanically activated so as to allow switching between a locked and unlocked condition.

An embodiment of the gripping mechanism 503 is shown in Figures 6A and 6B. In the present example, the configuration of the gripping mechanism 504 is identical.

In the present example, the gripping mechanism 503 comprises a thermomechanical shape memory alloy which is configured to grip cable 502 when it is heated. In the specific embodiment of Figure 6A and 6B, the thermomechanical shape memory alloy is in the form of a helical coil 601 that surrounds the cable 502. Thus, in the unlocked condition, illustrated in Figure 6A, the coil 601 is loose around the cable 502. Upon heating, as shown in Figure 6B the coil 601 contracts, thereby gripping the cable and facilitating the locked condition.

In an embodiment, the thermomechanical shape memory alloy is nitinol, but other thermomechanical shape memory alloys may be used. Further, heating of the thermomechanical shape memory alloy in the present example is achieved by way of Joule heating, which is to say the passing of electrical current therethrough. Control of the gripping mechanisms of the present embodiment by the controller 306 using such a method will be described further with reference to Figure 8. It should be appreciated that other methods of heating the thermomechanical shape memory alloy may be employed.

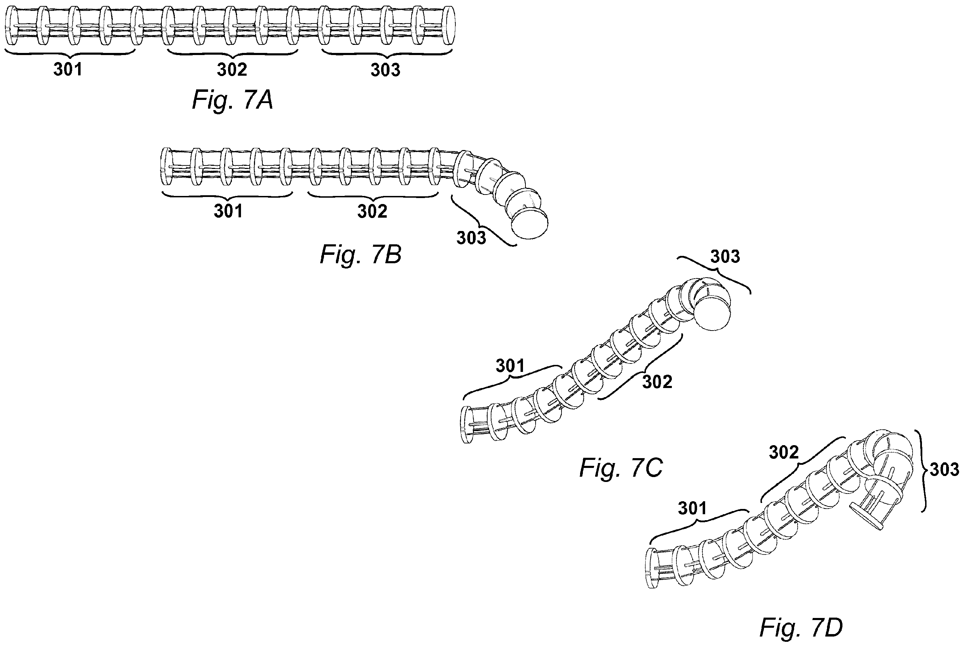

As described previously, the arm 203 comprises a plurality of sections, each of which are individually-lockable and which comprise a plurality of segments having positions that are adjustable relative to each other so as to adopt a pose. A locking mechanism is located in each section, which is configured to switch between a locked condition in which the pose of the segments in the respective section is locked, and an unlocked condition in which the pose of the segments in the respective section is not locked. Actuators adjust the pose of the segments in sections that are in an unlocked condition. Figures 7A to 7D illustrates how these features allow the arm 203 to change shape. In this example, the arm 203 comprises three sections: sections 301, 302 and 303.

Initially, as illustrated in Figure 7A, the arm 203 is in a straight condition. Section 303 is unlocked, whilst sections 301 and 302 remain locked. Referring to Figure 7B, movement of the actuation cables by the actuators 303, 304, and 305 is co-ordinated by the controller 306 to effect movement of section 303. Following this first movement, as shown in Figure 7C, section 303 is locked, and section 301 is unlocked. Again, movement of the actuation cables effect movement of section 301, and thus the movement of sections 302 and 303 with respect to the surround space. Finally, referring to 7D, in this example set of movements, section 301 is again locked whilst section 303 is unlocked and movement of the actuation cables again effects movement of section 303.

The configuration of controller 306 is shown in Figure 8. In this example, the controller 306 comprises a microcontroller 801 which is coupled to circuitry and components for controlling the spools of the actuators, illustrated at 802, and the thermomechanical shape memory alloy gripping mechanisms, illustrated at 803. In the present example, a respective set of circuitry and components 802 for controlling the spools of the actuators is provided for each section in the arm 203. Further, in the present example, a respective set of circuitry and components 803 is provided for section for controlling thermomechanical shape memory alloy gripping mechanisms.

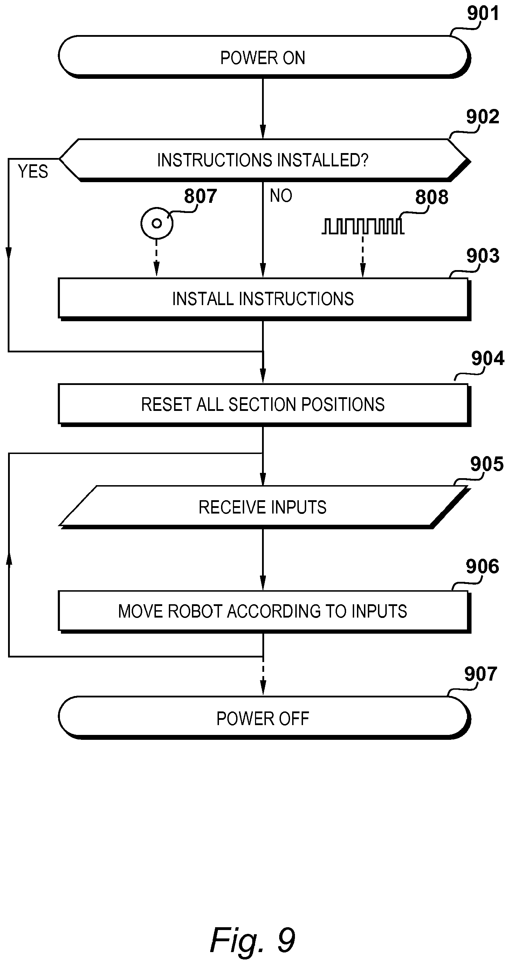

In the present embodiment, the microcontroller 801 comprises a central processing unit (CPU) 804, random access memory (RAM) 805, and read only memory (ROM) 806. ROM 806 provides non-volatile storage for computer-readable instructions which may be loaded into memory (either RAM 805 or cache in CPU 806), and then executed by the CPU. Instructions for controlling the robot 201 may either be transferred into ROM 806 from a computer-readable medium 807, or by direct data download of the instructions 808 via a network connection or serial port, for example. Procedures carried out by the microcontroller 801 will be described further with reference to Figures 9 to 11.

The microcontroller 801 further comprises general purpose input/output pins to facilitate control of the components and circuitry 802 and 803. In particular, microcontroller 801 is coupled to a respective motor driver 809, which drives a motor 810 connected with a spool 811 of an actuator in the actuation pack 202. In the present example, each spool has connected to it an encoder 812 in combination with a differential line receiver 813 to provide data back to the microcontroller 801 as to the state of the spool 811. This may allow, for example, feedback control of the motor, and/or an evaluation of the tension of the actuation cable.

In addition, the microcontroller 801 is connected with a respective amplifier 814 that is in turn connected to each of the thermomechanical shape memory alloy gripping mechanisms in a section of the arm 203, identified as 815 in the Figure. This allows the gripping mechanisms to be controlled, and thus the locking mechanisms in the arm 203 to be switched under program control between a locked condition and an unlocked condition.

The function of microcontroller 801 may be fulfilled by a similar computing device, such as a field-programmable gate array (FPGA), an application-specific integrated circuit (ASIC), or a personal computer running software providing the functionality of the instructions stored in ROM 806.

It will further be appreciated that microcontroller 801, or its equivalents, may be located within the actuation pack 202 or at another location.

Procedures carried out by microcontroller 801 are set out in Figure 9.

At step 901, the microcontroller 801 is powered on, and at step 902 a question is asked as to whether instructions for controlling robot 201 have been installed. If not, then control proceeds to step 903 where the instructions are installed, either from the computer-readable medium 807, or by direct data download of the instructions 808 via a network connection or serial port, for example.

Following installation, or if the instructions were already installed to the effect that the question asked at step 902 was answered in the affirmative, microcontroller 801 begins operations by first resetting the positions of each section in arm 203 at step 904. This process comprises iteratively locking and unlocking each section and operating the actuators until the arm 203 adopts a known pose. In this way, movements may be performed relative to a known baseline.

The microcontroller 801 then waits until it receives inputs at step 905, instructing the arm 203 to adopt a certain required pose. The microcontroller 801 thus, at step 906, moves the arm 203 according to those inputs. In the present example, the inputs may specify the required pose to be adopted, with microcontroller 801 operating to derive the combination of locking, unlocking, and movements of the actuation cables required to achieve the required pose.

Once step 906 has been completed, microcontroller 801 either waits for further inputs to be received at step 905, or is powered off at step 906 when robot 201 is no longer in use.

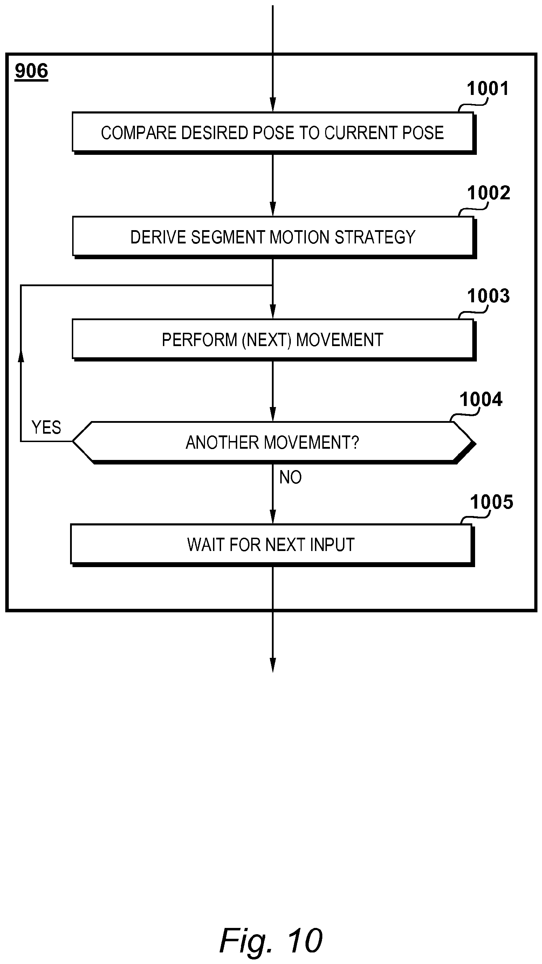

Procedures carried out in step 906 are set out in Figure 10.

Following receipt of the input at step 905, microcontroller 801 first compares the desired pose to the current pose of the arm 203 at step 1001. A motion strategy is then derived at step 1002 based on the difference between the current and desired pose. In the present example, this involves, on a section-by-section basis, evaluating the change in configuration required and compiling a list of combined movements of the actuation cables which will achieve the required pose for the respective section. More sophisticated control may be achieved by combining movement of multiple sections.

Once the strategy has been produced at step 1002, a loop is entered into, in which a movement is performed at step 1003, until no more movements are left to perform and thus the question of step 1004 as to whether any more movements are required is answered in the negative. Microcontroller 801 then waits for the next input at step 1005, until one arrives or it is powered off.

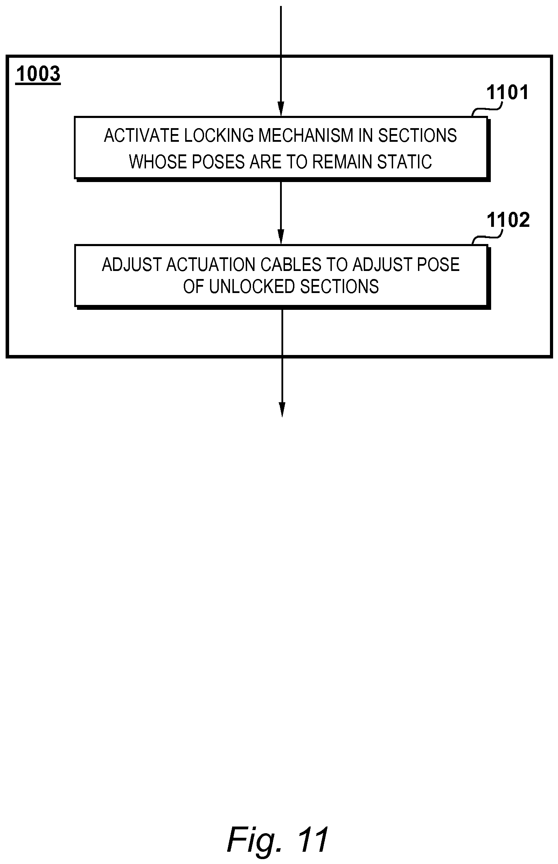

Procedures carried out during step 1003 are set out in Figure 11.

For each movement in the section, first the locking mechanisms in each section which is to remain static are placed into a locking condition at step 1102. Those which are to be moved are not locked, thus remaining in an unlocked condition.

At step 1103, the actuation cables are moved by operation of the actuators so as to achieve the required pose for the section(s) being moved during the current iteration.

Step 1003 is performed as many times as is required by the strategy derived in step 1002, until the arm 203 adopts the required pose, at which point, in the present embodiment, all locking mechanisms enter a locked condition so as to hold the arm 203 static during use.

It is possible, for example, that a particular section may be repeatedly unlocked, moved and then locked, particularly should the position of the rest of the arm 203 have to remain between certain bounds.

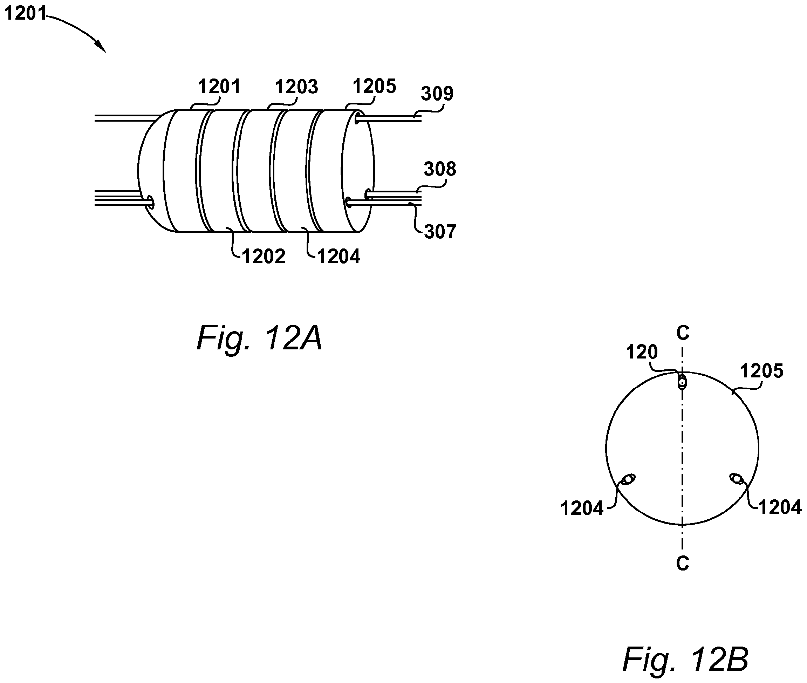

An alternative embodiment of the robot 201 is envisaged, in which the arm 203 does not comprise a backbone running through each segment. One configuration to achieve this is shown in Figures 12A and 12B, in which a section 1201 of such an alternative arm is shown.

The section 1201 comprises, in a similar way to sections 301, 302, and 303, a plurality of segments. In this case five segments 1202, 1203, 1204, 1205, and 1206 are provided. More or fewer may be provided in other embodiments. Referring to Figure 12A, these segments are located adjacent one another, in contrast to the spaced relationship between segments 401 to 405. Referring to Figure 12B, the segments include apertures 1207, 1208, and 1209 to allow the actuation cables 307, 308, and 309 to pass therethrough.

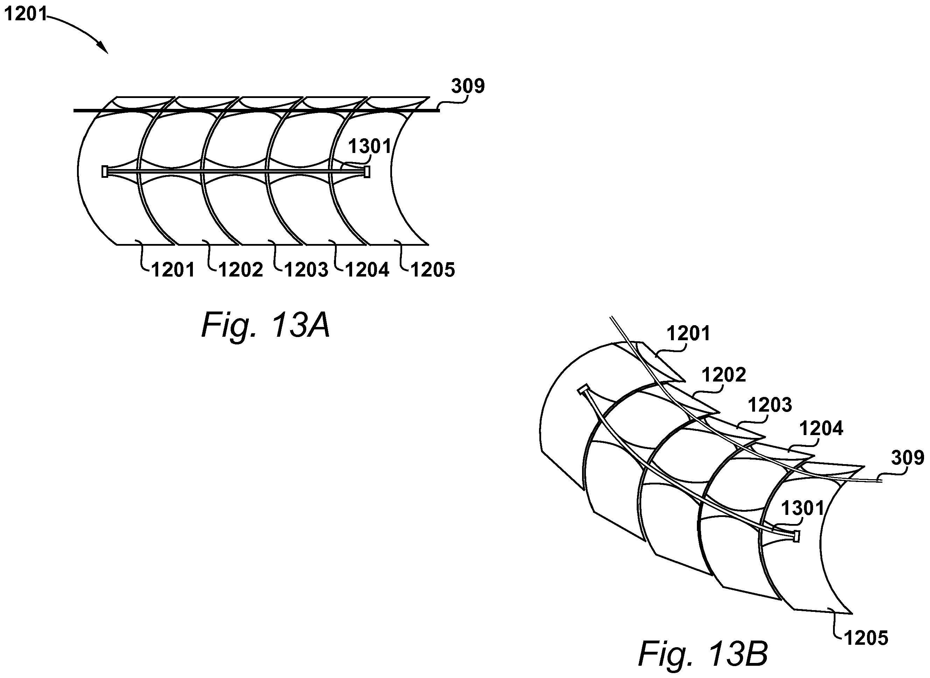

A cross section along C-C of Figure 12B is shown in Figure 13A. The segments 1202 to 1206 are, as previously described, located adjacent one another. In the present example, section 1201 is configured to be moveable in two dimensions. Thus, the segments include co-operating curved surfaces, curved in two dimensions. In this embodiment, the surfaces are portions of spheres. Should the section 1201 only need to be moved in one dimension, then the segments may instead only need to be curved in one dimensions, and thus their surfaces may be portions of cylinders.

The use of curved co-operating surfaces for the segments allows them to move relative to one another, as illustrated in Figure 13B in which movement of the actuation cable 309 has effected relative movement of the segments 1203 to 1206.

In this example, the section 1201 includes a locking mechanism comprising a compressible material running though the segments. In the specific embodiment of Figures 13A and 13B, a cable 1301 is provided which is anchored in and originates at the first end segment 1202 and then terminates in second end segment 1206 where it is also anchored. The cable 1301 and runs axially through segments 1203, 1204, and 1205. Thus when cable 1301 shortens in length, tension increases and the friction between the co-operating surfaces of the segments 1202 to 1206 causes the section 1201 to enter a locked condition, in which relative movement of the segments is not facilitated. In a specific embodiment, the compressible cable 1301 is a thermomechanical shape memory alloy. The alloy may be nitinol, or any other suitable material. In this way, when current is passed through, the cable 1301 shortens. Thus controller 206 may effect locking and unlocking of section 1201.

It will be appreciated by those skilled in the art that the hyper-redundant manipulator of the present invention facilitates a reduction in the number of actuation cables required to effect movement of the sections in the arm. This therefore reduces complexity of the actuation pack, and furthermore, the cross sectional area of the sections may remain substantially constant, as only one set of actuation cables need pass therethrough.

This is in contrast with prior art approaches in which the first section proximal to the actuation pack must contain as many sets of actuation cables as moveable sections. Thus, the hyper-redundant manipulator of the present invention may therefore carry a greater number of services, and/or be made longer, and/or be made more slender than prior art robots.

## Claims

1. A hyper-redundant manipulator for insertion into an area of interest through an aperture, comprising:
a plurality of individually-lockable sections, each of which comprise a plurality of segments having positions that are adjustable relative to each other so as to adopt a pose;
a respective locking mechanism in each section configured to switch between a locked condition in which the pose of the segments in the respective section is locked, and an unlocked condition in which the pose of the segments in the respective section is not locked; and
a plurality of actuators common to all of the sections configured to adjust the pose of the segments in sections with a locking mechanism in an unlocked condition.

2. The hyper-redundant manipulator of claim 1, in which the segments are attached in spaced relation to a backbone which runs through each segment.

3. The hyper-redundant manipulator of claim 1, in which the respective locking mechanism in each section comprises:
a cable which originates in the first end segment;
passes through each segment on one side of the backbone, to the second end segment;
returns through each segment on the other side of the backbone, and terminates at the first end segment;
wherein the second end segment includes a gripping mechanism operative to keep the segment in position on the cable and thereby lock the section.

4. The hyper-redundant manipulator of claim 1, in which the gripping mechanism comprises a thermomechanical shape memory alloy arranged to grip the cable when heated.

5. The hyper-redundant manipulator of claim 1, in which the thermomechanical shape memory alloy in the gripping mechanism is in the form of a helical coil coiled around the cable.

6. The hyper-redundant manipulator of claim 1, in which all of the segments in each section include a respective gripping mechanism operative to lock the segment in position on the cable.

7. The hyper-redundant manipulator of claim 1, in which the cable is under tension.

8. The hyper-redundant manipulator of claim 1, in which the tension is provided by springs at the first end segment arranged to take up slack in the cable.

9. The hyper-redundant manipulator of claim 1, in which two cables are provided which pass through the segments in orthogonal planes to lock the pose of the sections in two dimensions.

10. The hyper-redundant manipulator of claim 1, in which the plurality of actuators each comprise an actuation cable which passes through each segment.

11. The hyper-redundant manipulator of claim 1, in which three actuation cables are provided to facilitate movement of the sections in two dimensions.

12. The hyper-redundant manipulator of claim 1, wherein:
the segments have cooperating curved surfaces;
each respective locking mechanism comprises a cable which originates in the first end segment, passes through each segment, and terminates at the second end segment; and
wherein the tension of the cable is configured to increase in the locked condition so as to increase the friction between the curved surfaces of the segments.

13. The hyper-redundant manipulator of claim 1, further comprising a controller to operate the actuators and the locking mechanisms, and wherein the controller is configured to:
lock the pose of one or more of the sections with the respective locking mechanism;
adjust the pose of the remaining sections with one or more of the actuators.

14. A method of controlling a hyper-redundant manipulator for insertion into an area of interest through an aperture, the manipulator having a plurality of individually-lockable sections, each of which comprise a plurality of segments having positions that are adjustable relative to each other so as to adopt a pose, the method comprising:
locking the pose of one or more sections with a respective locking mechanism in each section;
adjusting the pose of the remaining sections with one or more actuators.
